# EUROPEAN PATENT APPLICATION

(11) **EP 1 548 326 A2**
(43) Date of publication of application: **29.06.2005**
(21) Application number: 05075670.9
(22) Date of filing: 15.06.2001
(51) Int. Cl.: F16H 7/12, F02B 67/06

(54) **Timing belt autotensioner with an anti-tooth skip mechanism**

(30) Priority: 16.06.2000 US 213802
(62) Divisional of application: 01947736.3
(71) Applicant: Gibson, Fabian W., 114 24 Stockholm (SE)
(72) Inventor: Gibson, Fabian W., 114 24 Stockholm (SE)
(74) Representative: De Hoop, Eric

(57) **Abstract**

A timing belt autotensioner includes a mechanism actuated by the reversal of timing belt movement direction. In automotive applications reversal of timing belt direction occurs only rarely under inadvertent or accidental circumstances. Such reversals can cause belt slackening sufficient for a toothed belt to jump gear teeth thereby changing engine cam shaft timing. Four related mechanisms are disclosed, each of which will, upon actuation by belt reversal cause the autotensioner pulley axis of rotation to move in a direction that tightens the belt during reverse movement of the belt. Thus, the belt remains tight to the toothed pulleys preventing jump or skip of the belt until the belt returns to proper forward belt movement.

## Description

### Background of the Invention.

This invention relates to the field of belt tensioners and belt tensioner systems. More particularly, the present invention relates to improvements in both mechanical type and hydraulic type belt tensioners for use with a camshaft belt drive system in automotive engine applications and the like.

A timing belt trained about two cooperating pulleys is well-known in the art of tension transmitting assemblies. There are economical advantages to the aforementioned when compared with other types of assemblies, specifically meshing gear assemblies. It is known to use an automatic tensioner in conjunction with a synchronous or timing belt drive system in order to compensate for tension variations in the belt. These variations are commonly attributable to dynamic effects such as cyclic torque variations and thermal effects that introduce changes in the length of a timing belt drive.

A tensioner is located on the normally slack side of the belt span in a belt drive system. Tensioner design is typically divided into two groups: mechanical tensioners, relying on coulomb friction as means to generate damping; and second, hydraulic tensioners, generally having a piston arrangement with a known leak-through and a one-way valve to create an asymmetrical damping which is proportional to speed. While these types of tensioners are designed to accommodate cyclic torque variations and thermal effects in a belt drive system by controlling belt tension at the slack side of the belt span, such tensioners are not designed to accommodate extreme torque reversal situations (kickback), such as engine backfiring or engine rotation in reverse (e.g., an automobile going backward while in forward gear with the clutch engaged).

In such extreme torque reversal situations, the slack side of the belt drive system becomes the tight side. The tight belt tension, on the normally slack side, causes the tensioner device to respond to the kickback and rapidly decrease belt tension by moving the pulley and its related pivot-arm away from the belt to slacken the tight side of the belt span. If the pulley movement is extreme, it can over-slacken the belt and result in tooth jump or ratcheting as the slackened belt enters the crank pulley or cam shaft pulleys. Tooth jump or ratcheting is deleterious to the operation of an engine as synchronization of the pulleys is lost.

Some tensioners have a ratchet and pawl mechanism attached to the tensioner's pivot arm to eliminate tensioner kickback and avoid tooth jump or ratcheting. United States Patent No. 4,299,584 discloses a ratchet operative with a leaf-spring pawl that allows some compliance at kickback by permitting the leaf-spring to deflect slightly. United States Patent No. 4,634,407 also teaches a ratchet and pawl mechanism where the ratchet operates as a one-way clutch that fixes the position of a pivot-arm such that the tensioner cannot operate to slacken the belt.

However, a common problem of ratchet/pawl devices is that the tensioner must operate primarily as a fixed idler in one direction as the ratchet mechanism limits the motion of the tensioner pivot-arm. In other words, the tensioner pivot-arm is unable to function in a direction that would allow the belt to be slackened. Under this condition, belt tooth failure and noise is reintroduced into the belt drive system when the belt cannot be at least partially slackened.

United States Patent No. 5,591,094 teaches an adjustable stop spaced at a distance from the pivot-arm when the pulley is biased in a pressing engagement against a static belt. The spacing is pre-determined to allow pivot-arm movement in a direction to slacken the belt while also preventing belt teeth from becoming disengaged from a toothed pulley (i.e., tooth jump) in an extreme torque reversal situation. The problem with an adjustable stop of this nature is that its distance from the pivot-arm is determined by compensation for the thermal effects of a hot engine. Each component of the belt drive system, however, leaves space for simultaneous tensioner arm vibration. In practice, this distance is large enough to allow tooth jump, especially under conditions such as low temperature and when at least one of the belt and pulleys is covered with a coating of ice.

### Summary of the Invention.

The new autotensioners comprise mechanisms actuated by the reversal of movement direction of the timing belts. Such a reversal of belt movement direction, normally a very rare occurrence, usually occurs during a short period of time, after which the belt returns to its normal forward or preferred movement. Each of the four mechanisms disclosed below, upon actuation by reverse belt movement, causes the autotensioner pulley axis of rotation to move in a direction that tightens the belt during reverse movement of the belt. Mechanisms are disclosed below that apply to autotensioners which have a trailing or leading geometry relative to the belt. Applied to autotensioners engaging the slack span of the belt, the mechanisms almost instantly tighten the belt in response to the reversal of belt direction. While disclosed for an automotive application, the invention is useful for any toothed belt applications where skipping or jumping of the belts over toothed gears would be deleterious to the operation of the machines.

### Brief Description of the Drawings.

The novel features which are believed to be characteristic of the present invention, as to its structure, organization, use and method of operation, together with further objectives and advantages thereof, will be better understood from the following drawings in which a presently preferred embodiment of the invention will now be illustrated by way of example. It is expressly understood, however, that the drawings are for the purpose of illustration and description only and are not intended as a definition of the limits of the invention. Embodiments of this invention will now be described by way of example in association with the accompanying drawings in which:
FIG. 1 is a side elevational view of a timing belt drive system;
FIG. 2 is a side elevational view of a first embodiment of the tensioning device of the present invention;
FIG. 3 is a side elevational view of a second embodiment of the tensioning device of the present invention;
FIG. 4 is a side elevational view of a third embodiment of the tensioning device of the present invention; and
FIG. 5 is a side elevation of a fourth embodiment of the tensioning device of the present invention.

### Detailed Description of the Preferred Embodiments.

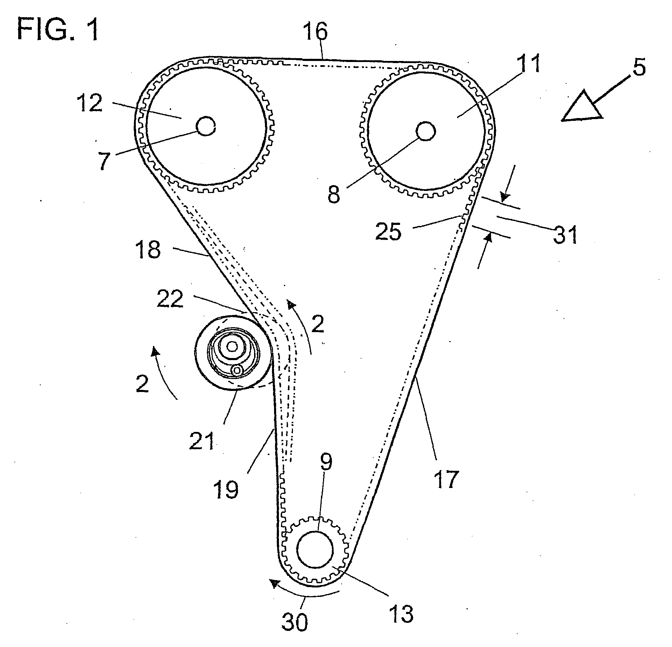

Reference will now be made to FIGs. 1 through 5.

FIG. 1 is a side elevational view of a synchronous timing belt drive 5 shown with a toothed belt comprising spans 16, 17, 18 and 19. Teeth 25, located on the interior periphery of the belt, are spaced at multiple pitch 31. The belt is entrained and tensioned around toothed pulleys 11, 12 and 13. The pulleys are illustrated as a camshaft drive of an automotive engine design that includes two exterior toothed cam pulleys 11, 12 and an exterior toothed crankshaft pulley 13. A belt-tensioning device 21 is mounted in connection with these pulleys such that it is operative in conjunction with the timing belt drive 5. As the engine operates over a range of RPM's, the drive camshaft pulleys 11, 12 introduce cyclic torque variations, which cause dynamic belt tension variations in belt spans 16 through 19. The tensioning device 21 is intended to compensate for torque variations, thermal growth when the engine is running, and stretch and wear of the belt which occurs during the life span of the drive 5.

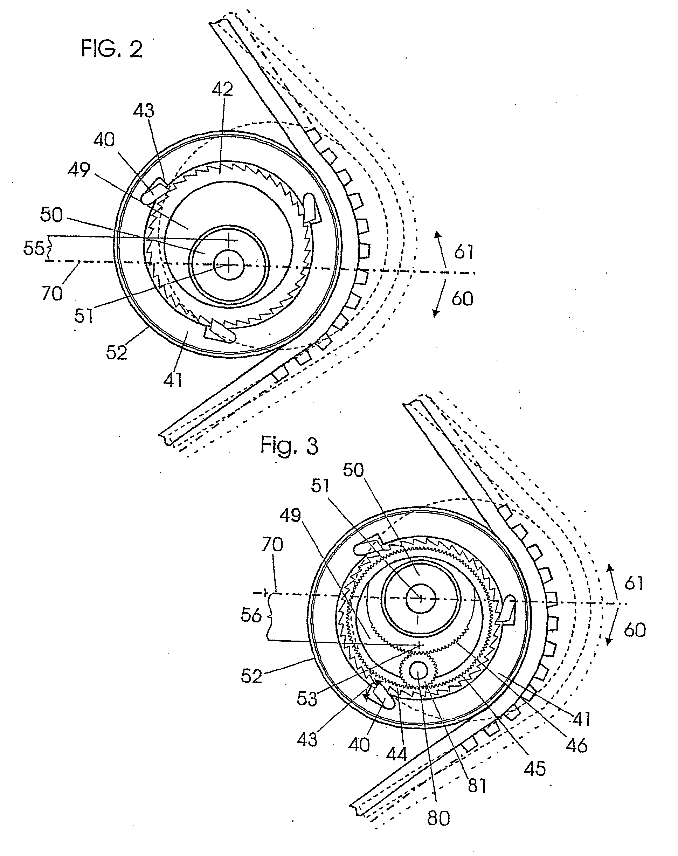

FIG. 2 illustrates a first embodiment of the present invention. The belt tensioner 21 is mounted on the engine via a pivot shaft 50 having a pivotal eccentric arm 49 to which a predetermined torque is applied, usually via a spring arrangement (not shown here). This torque generates a predetermined belt force which is transmitted to the belt via a pulley 52 attached to eccentric arm 49 by any means as is apparent to one skilled in the art, and generally through a bearing (not shown).

The tensioning device as shown in Fig. 2 is a trailing type configuration. The center 53 of arm structure 49 is located above line 70 throughout its operational range. Line 70 represents the over-center position of pulley 52 with respect to the pivot shaft 50. A ratchet wheel 42 is attached to arm structure 49. A plurality of pawls 40, located in pockets within the housing structure 41, and attached to pulley 52, bias the ratchet wheel 42 to form a one-way clutch and permit the unrestricted rotation of pulley 52 in the counterclockwise rotational direction of the drive 5 as depicted by arrow 61. In the event of a clockwise rotational direction, depicted by arrow 60 and which generally occurs under kickback and rollback conditions, the pawls 40 engage ratchet wheel 42 locking the pulley 52 and eccentric arm structure 49 together. This generates frictional torque between the belt 18 and pulley 52 in the direction of arrow 60. The torque upsets the abnormal belt force caused by the belt reversal. Using an existing tensioner device typical of the prior art, pulley 52 is normally pushed in an outward belt direction as the belt force, in conjunction with the arm length 55, generates an opposing torque which overcomes the spring torque applied to the eccentric arm 49, slackening the belt, and, in turn, potentially creating tooth jump. When using the tensioning device of the present invention, the belt 18 causes engagement of the ratchet 40, 41, 42 generating torque and moving the pulley 52 toward the belt, thus increasing the belt tension temporarily on the slack side and preventing tooth jump.

FIG. 3 is an enlarged view of the tensioning device of FIG. 1 and illustrates a second embodiment of the present invention. The tensioner 21 functions in the same manner as explained above. The tensioner as shown in FIG. 3 is a leading type configuration. The center 53 of arm structure 49 is located below the line 70 throughout its operational range. A ratchet wheel 44 is pivotally mounted on the cylindrical surface of the eccentric arm 49. A plurality of pawls 40, located in pockets within housing structure 41, attached to pulley 52 bias the ratchet wheel 44 and permit the unrestricted rotation of pulley 52 in the counterclockwise rotational direction, depicted by arrow 61 of drive 5. In the event of a clockwise rotational direction, depicted by arrow 60 and which generally occurs during kickback and rollback conditions, the pawls 40 engage ratchet wheel 44 enabling rotation of ratchet wheel 44 together with the pulley 52. The ratchet wheel 44 is meshed with gear 81 through teeth 45 on the inside of the volute. Gear 81 is pivotally mounted on a support structure 80, and is attached to the pivot structure 50 via a member not shown here for clarity. Thus, pivot structure 80 is fixed. Gear 81 is meshed with teeth 46 which are part of the eccentric arm 49. This gear train results in the eccentric arm 49 rotating toward the belt and generating an opposing torque. This opposing torque overcomes the belt force generated torque resulting from the clockwise rotational direction of the drive 5 (depicted by arrow 60), and increases the belt tension which, in turn, prevents tooth jump.

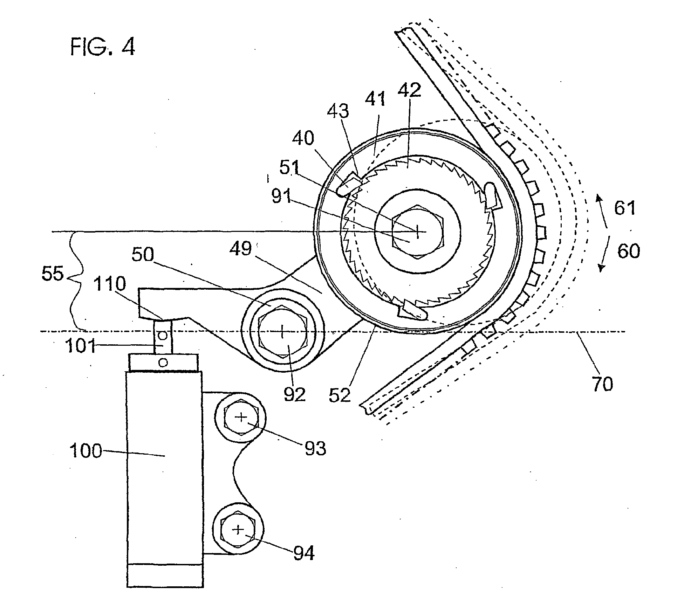

FIG. 4 illustrates a third embodiment of the present invention. The belt tensioner comprises a pulley 52, an eccentric arm structure 49, a hydraulic actuator unit 100, mounted on an engine via a pivot shaft 50 and bolts 93, 94. Pulley 52 is attached to the eccentric arm structure 49 through a bearing fixed to the arm structure 49 via bolt 91. The arm structure 49, pivotally trained about pivot shaft 50, allows the pulley 52 to rotate eccentrically around the center of pivot shaft 50. Hydraulic actuator 100 exerts a known force at point 110 generating a predetermined torque that is transferred to arm structure 49 in conjunction with arm length 55. This generates a predetermined belt force that is transmitted to the belt via pulley 52.

The tensioner shown in FIG. 4 is a trailing type configuration. The center of pulley 52 is located above line 70 throughout its operational range. Line 70 represents the over center position of the pulley 52 with respect to the pivot shaft 50. A ratchet wheel 42 is attached to the arm structure 49. A plurality of pawls 40, located in pockets within housing structure 41, attached to pulley 52 bias the ratchet wheel 42 and permit the unrestricted rotation of pulley 52 in the counterclockwise rotational direction of the drive 5 depicted by arrow 61. In the event of clockwise rotational direction, depicted by arrow 60 and which occurs during kickback and rollback conditions, the pawls 40 engage ratchet wheel 42 locking the pulley 52 and eccentric arm structure 40 together. This generates a frictional torque between the belt 18 and pulley 52 in the direction of arrow 60. The torque upsets the abnormal belt force caused by the belt reversal, moves the pulley 52 toward the belt increasing the belt tension temporarily, and, in turn, prevents tooth jump.

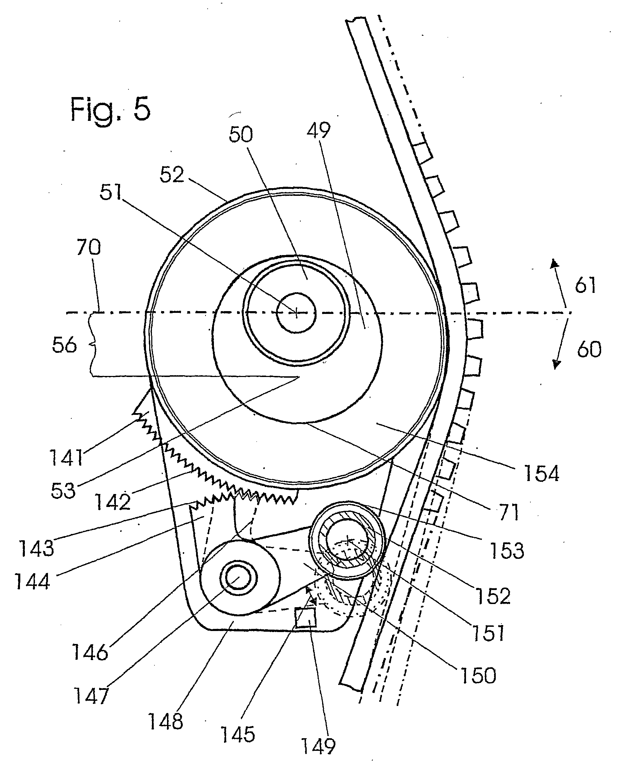

In FIG. 5, a belt tensioner 21 is mounted on the engine via a pivot shaft 50 and has a pivotal eccentric arm structure 49 to which a predetermined torque is applied usually via a spring arrangement (not shown here). This generates a predetermined belt force which is transmitted into the belt via a pulley 52 attached to eccentric arm structure 49 through a bearing usually of the type known as ball or roller (not shown here). The tensioner configuration shown is of the leading type, wherein the center 53 of arm structure 49 is below the line 70 throughout its operational range as above. A second pivotal structure is mounted to the base plate 148 of the tensioner, comprised of a second eccentric arm structure 150 and pulley 153. Attached to the arm structure 150 is pawl 144 which at its tip has a gear mesh 143. Within pulley 153 is a one-way clutch 152 biasing the arm structure to permit free rotation of the pulley 153 when the belt moves normally in direction 61. When the engine kicks back or roll back occurs, the belt changes direction to 60.

The one-way clutch 152 senses this change of direction and locks pulley 153 and arm structure 150 firmly together. This causes the arm structure 150 to rotate in the direction shown by arrow 145. Pawl 144 rotates with the arm 150 resulting in the gear mesh 143 engaging mesh 142 which is attached to the first pivotally mounted eccentric arm structure 49. This gearing results in the eccentric arm structure 49 rotating toward the belt and generating an opposing torque that overcomes the belt force generated torque due to the abnormal direction of the drive 5 depicted by arrow 60, thus increasing the belt tension and preventing tooth jump. A stop 149 prevents over centering of the second arm structure 150.

Throughout this specification, unless the context requires otherwise, the word "comprise," and variations such as "comprises" or "comprising," will be understood to imply the inclusion of a stated integer or step or group of integers or steps but not to the exclusion of any other integer or step or group of integers or steps. The ratchet and pawl mechanisms forming one-way clutches are to be understood as including equivalents such as spring clutches, sprag clutches and roller ramp clutches.

## Claims

1. In a timing belt autotensioner comprising a pulley rotatable about a first axis and adapted to contact a timing belt, and an eccentric arm structure rotatable about a second axis spaced from the first axis, said eccentric arm structure supporting the pulley about the first axis and adapted to urge the first axis and pulley toward the timing belt during a preferred rotation of the pulley, the improvement comprising separate means adapted to contact the timing belt at a location spaced from the pulley contact with the timing belt, said separate means movable in response to the direction of movement of the timing belt, and in response to movement of the timing belt in a non-preferred direction, actuating movement of the eccentric arm structure to move the first axis and pulley toward the timing belt.

2. The timing belt autotensioner of claim 1 wherein the separate means comprises a second pulley rotatably mounted on a second arm structure, said second arm structure engageable with the eccentric arm structure.

3. The timing belt autotensioner of claim 2 wherein said second pulley includes a second one-way clutch engageable in response to movement of the timing belt in the non-preferred direction.

4. The timing belt autotensioner of claim 2 wherein gear teeth on the second arm structure and eccentric arm structure mesh to provide the engagement.

5. The timing belt autotensioner of claim 2 including a limit stop to prevent over centering of the second arm structure.

6. A timing belt autotensioner comprising first movable means contactable with a timing belt and in response to the direction of movement of the timing belt movable relative to a first location, second movable means supporting the first movable means and first location, said second movable means movable relative to a second location, and said second location spaced from the first location, one-way engagement means adapted to remain disengaged in response to movement of the timing belt in a preferred direction and to engage in response to movement of the timing belt in the other direction, said one-way engagement causing engagement of the first movable means with the second movable means whereby the second movable means moves the first locations and first movable means toward the timing belt.

7. A timing belt autotensioner comprising a pulley contactable with a timing belt, said pulley rotatable about a first axis at the pulley center, an eccentric arm structure supporting the pulley about the first axis and rotatable about a second axis, said second axis being spaced form the first axis, one-way engagement means adapted to remain disengaged with rotation of the pulley in a preferred direction and to engage with rotation of the pulley in the other direction, said one-way engagement causing engagement of the pulley with the eccentric arm structure whereby the eccentric arm structure moves the first axis of rotation and pulley toward the timing belt.

8. In a timing belt autotensioner comprising a pulley rotatable about a first axis and adapted to contact a timing belt, and an eccentric arms structure rotatable about a second axis spaced from the first axis, said eccentric arm structure supporting the pulley about the first axis and adapted to urge the first axis and pulley toward the timing belt during a preferred rotation of the pulley, the improvement comprising a one-way clutch between the pulley and eccentric arm structure, said one-way clutch engageable in response to the other rotation of the pulley thereby rotating the eccentric arm structure to move the first axis and pulley toward the timing belt.

9. In a timing belt autotensioner comprising a pulley rotatable about a first axis and adapted to contact a timing belt, and an eccentric arm structure rotatable about a second axis spaced from the first axis, said eccentric arm structure supporting the pulley about the first axis, and adapted to urge the first axis and pulley toward the timing belt during a preferred rotation of the pulley, the improvement comprising a one-way clutch and gear train between the pulley and eccentric arm structure, said one-way clutch and gear train engageable in response to the other rotation of the pulley thereby causing the gear train to rotate the eccentric arm structure to move the first axis and pulley toward the timing belt.

10. The timing belt autotensioner of claim 9, wherein the one-way clutch and gear train comprises at least one pawl and ratchet wheel, said ratchet wheel including a first gear, a second gear meshed with the first gear and rotatable about a fixed third axis, and gear teeth on the eccentric arm structure, said gear teeth meshed with the second gear.

11. In a timing belt autotensioner comprising a pulley rotatable about a first axis and adapted to contact a timing belt, and an eccentric arm structure rotatable about a second axis spaced from the first axis, said eccentric arm structure supporting the pulley about the first axis, and hydraulic means adapted to urge the first axis and pulley toward the timing belt during a preferred rotation of the pulley, the improvement comprising a one-way clutch between the pulley and eccentric arm structure, and said second axis being spaced beyond the periphery of the pulley, said one-way clutch engageable in response to the other rotation of the pulley thereby rotating the eccentric arm structure to move the first axis and pulley toward the timing belt and the eccentric arm structure away from the hydraulic means.

12. The timing belt autotensioner of claim 11, wherein the eccentric arm structure engages a hydraulic actuator.

13. The timing belt autotensioner of claim 8 or 12, wherein the one-way clutch is a ratchet comprising at least one pawl and a ratchet wheel.

14. The timing belt autotensioner of claim 8, 9 or 11, wherein the one-way clutch (and gear train in the case of claim 9) is diametrically less than the diameter of the pulley.
